# EUROPÄISCHE PATENTANMELDUNG

(11) **EP 2 199 260 A1**
(43) Veröffentlichungstag der Anmeldung: **23.06.2010**
(21) Anmeldenummer: 09178517.0
(22) Anmeldetag: 09.12.2009
(51) Int. Cl.: C02F 1/32, C02F 1/36

(54) **Vorrichtung zur Ballastwasserbehandlung**

(30) Priorität: 11.12.2008 DE 202008016363 U
(71) Anmelder: Büttner, Klaus, D-25336 Klein Nordende (DE)
(72) Erfinder: Büttner, Klaus, 25336 Klein Nordende (DE); Tiedemann, Lothar, 22926 Ahrensburg (DE); Dube, Markus, 22303 Hamburg (DE)
(74) Vertreter: Meier, Frank

(57) **Zusammenfassung**

Vorrichtung zur Aufbereitung von wässrigen Flüssigkeiten einer Ballastwasseranlage zwecks Elimination von darin enthaltenen Schadstoffen, aufweisend mindestens einen UV-Strahler und ein die UV-Strahler umgebendes Gehäuse, wobei die UV-Strahler mindestens zwei Wellenlängen aus dem Spektrum 170 bis 260 nm emittieren können, weiterhin aufweisend mindestens einen Ultraschallgenerator (US), mit einer Frequenz höher als 18 kHz, wobei das Gehäuse rohrförmig mit Rohrverbindungsteilen an beiden Endseiten ausgebildet ist, die Flüssigkeit so auf die Oberfläche der UV-Strahler geleitet wird, dass sich dort ein dünner Fließfilm bildet und eine chaotische Strömung in der Flüssigkeit mittels der Ultraschallgeneratoren (US) erzeugt werden kann, dadurch gekennzeichnet, dass das Gehäuse rohrförmig mit Rohrverbindungsteilen an beiden Endverbindungsteilen ausgebildet ist.

## Beschreibung

Die Erfindung bezieht sich auf eine Vorrichtung zur Aufbereitung von wässrigen Flüssigkeiten einer Ballastwasseranlage zwecks Elimination von darin enthaltenen Schadstoffen, aufweisend mindestens einen UV-Strahler und ein die UV-Strahler umgebendes Gehäuse, wobei die UV-Strahler mindestens zwei Wellenlängen aus dem Spektrum 170 bis 260 nm emittieren können, weiterhin aufweisend mindestens einen Ultraschallgenerator, mit einer Frequenz höher als 18 kHz, wobei das Gehäuse rohrförmig mit Rohrverbindungsteilen an beiden Endseiten ausgebildet ist, die Flüssigkeit so auf die Oberfläche der UV-Strahler geleitet wird, dass sich dort ein dünner Fließfilm bildet und eine chaotische Strömung in der Flüssigkeit mittels der Ultraschallgeneratoren erzeugt werden kann.

Eine derartige Vorrichtung ist zur Aufbereitung von wässrigen Flüssigkeiten zwecks Sterilisation und Elimination von darin enthaltenen Schadstoffen bekannt (EP 1 436 025 B1).

Durch die vorliegende Erfindung soll eine optimierte Vorrichtung gemäß der Erfindung zur Ballastwasserbehandlung geschaffen werden, was dadurch erreicht wird, dass bei einer Vorrichtung der eingangs genannten Art das Gehäuse rohrförmig mit Rohrverbindungsteilen an beiden Endseiten ausgebildet ist.

Die modulare und in bestehende Ballastwasserleitungen integrierbare Vorrichtung gemäß der Erfindung dient der Behandlung von Ballastwasser. Die mit Ballastwasser aufgenommenen Mikroorganismen werden durch ein Verfahren der Schall-Licht-Kopplung abgetötet. Aufgrund der Kompaktheit der eingesetzten Schallgeber und UV-Röhren ist es möglich, das Ballastwasserbehandlungsmodul in die auf einem Schiff vorhandenen Ballastwasserleitungen zu integrieren. Durch Parallel- und/oder Serienschaltung der einzelnen Module lässt sich die Anlage an die auftretenden Ballastwasserfrachten anpassen.

Im Gegensatz zu bekannten Ballastwasserbehandlungsanlagen eignet sich die Vorrichtung gemäß der Erfindung nicht nur für Neubauten, sondern auch für die kostengünstige Nachrüstung von älteren Schiffen, da sie sich in die vorhandene Verrohrung integrieren lässt. Das Gehäuse der Vorrichtung gemäß der Erfindung kann den gleichen Außendurchmesser aufweisen, wie die vorhandenen Ballastwasserleitungen. Ein weiterer Vorteil der Erfindung ist die Wartungsfreundlichkeit des Systems, da sich die einzelnen Module mit geringem Aufwand aus- und einbauen lassen.

Die Vorrichtung gemäß der Erfindung dient der Behandlung von Ballastwasser gemäß den Vorgaben der International Maritime Organisation (IMO) mit einer Technologie, die auf Schall-Licht-Kopplung beruht. Die Erfindung nutzt die vorhandene Infrastruktur eines Schiffes und ergänzt das bestehende Ballastwassersystem um die notwendige Desinfektionsstufe des aufgenommenen Ballastwassers. Eine Vorfilterung des Ballastwassers kann entfallen, da die eingesetzte Technologie in der Lage ist, auch Wasser mit starker Schwebstoffbelastung zuverlässig zu desinfizieren. Nach der Desinfektion gelangt das behandelte Wasser in Ballastwassertanks und kann von dort jederzeit abgepumpt werden.

Hauptmerkmal der Vorrichtung der Erfindung ist die Möglichkeit der einfachen Integration in das vorhandene Ballastwassersystem. Damit entfällt für Neubauten eine aufwändige Neukonstruktion und es wird die kostengünstige Nachrüstung vorhandener Schiffe ermöglicht. Die komplette Desinfektionsstufe lässt sich in einem Zuleitungsrohr der bestehenden Ballastwasseranlage unterbringen (Parallel- und Serienschaltung ist möglich). Die externe Steuer- und Kontrolleinheit benötigt nur eine geringe Stellfläche, so dass für die komplette Anlage nur einen geringer zusätzlicher Raumbedarf entsteht.

Die Desinfektionsleistung der Anlage beruht auf der Schall-Licht-Kopplung. Zusätzlich verhindert der Einsatz der Ultraschallschwinger die Bildung eines Biofilms auf den Innenflächen der Ballastwasserleitung und den Glasoberflächen der UV-Röhren. Dieser Effekt beruht auch auf der bekannten Reinigungswirkung von Ultraschall und trägt damit zum geringen Wartungsaufwand der Anlage bei, da eine aufwändige chemische Reinigung der Anlage entfällt. Eine weitere Wirkung ist, dass das Ballastwasser durch Ultraschall entgast wird und somit die Oxidation des Metalls der Ballastwassertanks vermindert werden kann. Die einzelnen US-Schwinger lassen sich durch Flansche mit dem Rohr der Ballastwasseranlage verbinden und sind den Anforderungen entsprechend beliebig positionierbar.

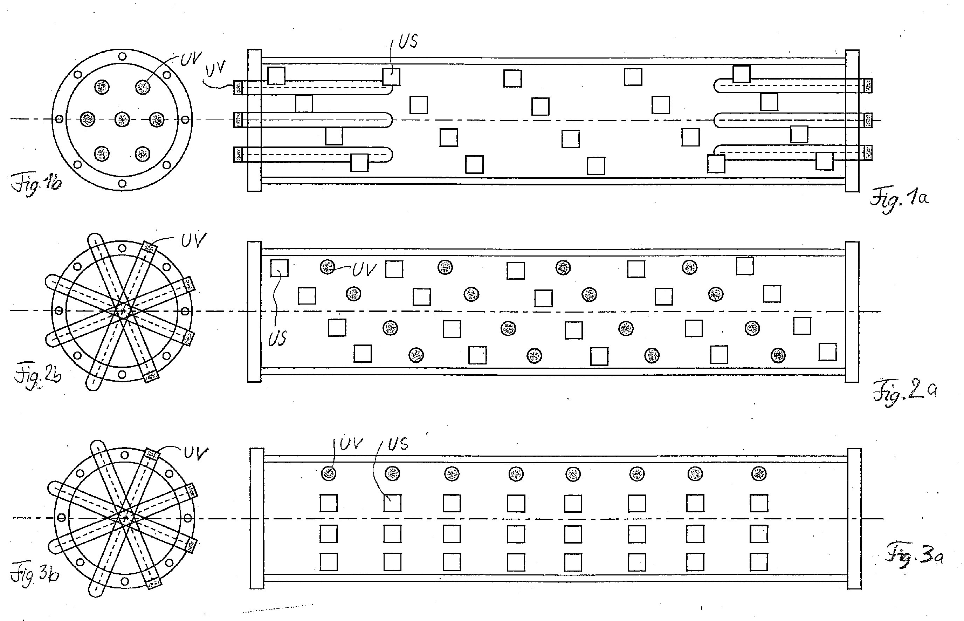

Bei der Anordnung der UV-Lampen gemäß der Erfindung sind mindestens zwei Varianten möglich:
durch eine geeignete Aufhängung werden die UV-Lampen in Längserstreckung zur Flussrichtung montiert (Fig. 1a) und
durch Öffnungen im Rohr werden die UV-Lampen quer zur Flussrichtung montiert (Fig. 2a).

Gegebenfalls entstehendes Knallgas kann durch die Kopplung mit einer Brennstoffzelle abgefangen werden und zur Stromerzeugung genutzt werden. Prinzipiell kann aber die Vorrichtung gemäß der Erfindung so ausgelegt werden, dass kein Knallgas entsteht.

Schiffe benötigen für die Einhaltung einer stabilen Fahrlage Ballast. Die Steuerung der Schiffslage erfolgt durch die gezielte Aufnahme und Abgabe von Ballastwasser sowie durch ständiges Umpumpen des vorhandenen Ballastwassers innerhalb des Schiffes.

Mit dem Ballastwasser werden Kleinstlebewesen und Mikroorganismen aufgenommen, die durch den Transport in den Ballastwassertanks und das Abpumpen am Bestimmungshafen in fremde Lebensräume gelangen können. Aus diesem Grund legen die IMO-Richtlinien zur Ballastwasserbehandlung fest, dass die Einschleppung von habitatfremden Kleinstlebewesen und Mikroorganismen verhindert werden soll.

Viele bekannte Verfahren und Vorrichtungen gehen davon aus, dass für die Behandlung des Ballastwassers ein Zeitraum von einigen Tagen zur Verfügung steht. In der Praxis ist es jedoch so, dass das Ballastwasser kontinuierlich im Schiff umgepumpt wird und auch nicht festgelegt ist, wann aufgenommenes Ballastwasser wieder abgegeben wird. Die Konsequenz, die sich in der vorliegenden Erfindung niederschlägt, ist daher, das Ballastwasser bereits bei der Aufnahme zu behandeln. Nur so ist sichergestellt, dass alle im Wasser vorhandenen Kleinstlebewesen und Mikroorganismen abgetötet werden und das Ballastwasser jederzeit abgepumpt werden kann.

Die Erfindung wird nachstehend anhand der Zeichnung beispielsweise erläutert.
Die Figuren 1a, 2a und 3a zeigen schematische Längsquerschnittsansichten von Vorrichtungen gemäß der Erfindung.
Die Figuren 1b, 2b und 3b zeigen Querschnittsansichten der in den Figuren 1a, 2a und 3a gezeigten Vorrichtungen gemäß der Erfindung.

In den Figuren ist ein zylindrisches Gehäuse der Vorrichtung gemäß der Erfindung zu erkennen. In den Figuren 1a, 2a und 3a sind links- und rechtsseitig die Endflächen der Gehäuse gezeigt, und an diesen Stellen befinden sich die Verbindungsteile mit dem vorhandenen Rohrleitungssystem einer Ballastwasseranlage. Als Verbindungsmöglichkeiten kommen Flanschverbindungen, aber auch andere Arten von Rohrverbindungen infrage. Insgesamt gesehen kann dadurch eine Ballastanlage realisiert werden, in dessen Rohrleitungssystem Gehäuse der Vorrichtungen gemäß der Erfindung mit dem wesentlichen gleichen Durchmesser integriert worden sind.

In den Figuren sind die UV-Strahler oder UV-Lampen in dunkler Farbe angelegt worden, während die Ultraschallschwinger oder Ultraschallgeneratoren durch Quadrate dargestellt worden sind.

Bei der Vorrichtung gemäß der Erfindung gemäß den Figuren 1a und 1b sind die UV-Strahler in Strömungsrichtung des Ballastwassers angeordnet, wohingegen in der Ausführungsform nach den Figuren 2b und 2a die UV-Strahler quer zur Strömungsrichtung ausgerichtet sind.

Bei der Vorrichtung gemäß den Figuren 3a und 3b sind die UV-Strahler ebenfalls quer zur Strömungsrichtung ausgerichtet, jedoch befindet sich jeweils eine bestimmte Anzahl von UV-Strahlern und Ultraschallgeneratoren im wesentlichen in einer gemeinsamen Ebene, so wie dies aus der Figur 3a hervorgeht. Bei der Ausführungsform nach den Figuren 2a und 2b sind die Ultraschallgeneratoren hingegen spiralenförmig im Gehäuse angeordnet.

## Patentansprüche

1. Vorrichtung zur Aufbereitung von wässrigen Flüssigkeiten einer Ballastwasseranlage zwecks Elimination von darin enthaltenen Schadstoffen, aufweisend mindestens einen UV-Strahler und ein die UV-Strahler umgebendes Gehäuse, wobei die UV-Strahler mindestens zwei Wellenlängen aus dem Spektrum 170 bis 260 nm emittieren können, weiterhin aufweisend mindestens einen Ultraschallgenerator, mit einer Frequenz höher als 18 kHz, wobei das Gehäuse rohrförmig mit Rohrverbindungsteilen an beiden Endseiten ausgebildet ist, die Flüssigkeit so auf die Oberfläche der UV-Strahler geleitet wird, dass sich dort ein dünner Fließfilm bildet und eine chaotische Strömung in der Flüssigkeit mittels der Ultraschallgeneratoren erzeugt werden kann, **dadurch gekennzeichnet, dass** das Gehäuse rohrförmig mit Rohrverbindungsteilen an beiden Endverbindungsteilen ausgebildet ist.
